# FASCICULE DE BREVET EUROPEEN

(11) **EP 3 161 088 B1**
(45) Date de publication et mention de la délivrance du brevet: **16.09.2020**
(21) Numéro de dépôt: 15733813.8
(22) Date de dépôt: 09.06.2015
(51) Int. Cl.: C09J 123/08, C09J 133/08, B32B 15/082, B32B 27/08, B32B 27/30, B32B 27/32, B32B 37/12

(54) **COMPOSITION ADHESIVE DE SCELLAGE**
SIEGELKLEBSTOFFKOMPOSITION
SEALING ADHESIVE COMPOSITION

(30) Priorité: 26.06.2014 FR 1455949
(43) Date de publication de la demande: 03.05.2017
(73) Titulaire: Arkema France, 92700 Colombes (FR)
(72) Inventeur: COQUET, Clio, F-27300 BERNAY (FR); LAURENT, Betty, F-27170 Barc (FR); DEVISME, Samuel, F-76000 Rouen (FR)
(74) Mandataire: Bandpay & Greuter
(86) Numéro de dépôt international: PCT/FR2015/051517
(87) Numéro de publication internationale: WO 2015/197933

(56) Documents cités:
- EP-A1- 0 547 798
- US-A- 4 276 111
- US-A1- 2006 014 022

## Description

### Domaine de l'invention

La présente invention se rapporte à une composition adhésive ou liant à base d'un copolymère d'éthylène et d'acrylate d'alkyle, utilisable dans un procédé d'extrusion-couchage pour application sur un support ou dans un procédé d'extrusion-lamination pour coller entre eux plusieurs supports pouvant être de nature différente ou pas, l'un de ces supports pouvant être un thermoplastique ou un métal tels qu'en particulier l'aluminium.

L'invention se rapporte ainsi également à un film de scellage constitué par cette composition adhésive ou une structure multicouche incluant le support et ledit film de scellage.

### Etat de l'art

Dans la suite, on entend par « scellage » la réunion de deux surfaces d'un film ou de deux couches, quelle que soit leur nature.

Il existe une grande variété d'emballages pour des produits alimentaires comme par exemple des emballages à ouverture pelable. Ces emballages à ouverture pelable peuvent être réalisés par scellage d'un opercule sur un contenant, les contenants pouvant être composés de différents matériaux et notamment différents polymères (Polystyrène, Polyéther téréphtalate, Polyéthylène, Polypropylène etc...). Les opercules doivent avoir une adhésion sur le contenant suffisamment forte pour éviter l'ouverture inopinée de l'emballage mais aussi suffisamment faible pour être pelable.

Les opercules sont des structures multicouches et sont généralement constitués de plusieurs couches dont au moins la couche adhésive de scellage (pelable) et la couche dite « mécanique » classiquement en polymère, papier, aluminium. Ces opercules peuvent être réalisés par extrusion-couchage ou par thermolamination d'un film obtenu en extrusion-soufflage de gaine.

La réalisation de cet opercule est sujette à plusieurs problèmes de processabilité :
- le collage sur le rouleau de refroidissement (« chill roll ») lors de la réalisation par extrusion-couchage,
- le problème d'ouverture de gaine lors de la fabrication du film par soufflage de gaine,
- le bloquant et le glissant du film réalisé par soufflage de gaine (également obtenu par exemple par filière à plat, extrusion couchage ou lamination) lors de la manipulation des bobines avant et pendant la thermolamination.

Le bloquant et le glissant sont des problématiques particulières à la production de film qui sont bien connues de l'homme du métier. Ainsi, l'utilisation d'agents glissants dans des films permet de réduire le Coefficient de Friction (COF) tout en conservant les propriétés optiques de brillance, de transparence et de clarté tandis que l'utilisation d'agents anti-bloquant permet de créer en surface du film des nodules qui facilitent le glissement du film sur tous types de supports.

Pour palier à ces problèmes de processabilité, il est connu de l'homme du métier qu'il est nécessaire d'ajouter à la couche adhésive de scellage des additifs de processabilité, c'est-à-dire des agents glissant et anti-bloquant.

La formulation de la couche adhésive de scellage (pelable) est dépendante du contenant sur lequel on veut sceller l'opercule. Il est connu de l'homme du métier que l'ajout de résine tackifiante dans du polyéthylène (PE), du polypropylène (PP), un copolymère d'éthylène et d'acétate de vinyle (EVA) permet d'obtenir une formulation de résine de scellage dont les performances en scellage sont excellentes sur de nombreux types de support. Les documents US 7495048 ou EP 2166034 illustrent cet état des connaissances.

Dans le document US 7495048, il est décrit une composition de résine de scellage comprenant :
- de 75% à 99% en poids d'un copolymère d'éthylène et d'un ester insaturé, préférentiellement un EVA présentant un taux d'acétate de vinyle supérieur à 5%,
- de 5% à 20% en poids d'une résine tackifiante à haut point de ramollissement.

Ces compositions permettent d'abaisser la température minimale de scellage.

Les taux de résine tackifiante utilisés à l'heure actuelle sont compris entre 5% et 20%. Or, avec de tels taux de résines tackifiantes, deux types de problèmes surviennent :
- un problème de stabilité thermique aux températures de mise en œuvre liée à la présence de la résine tackifiante,
- une perte de transparence liée à la forte additivation (ajout d'additifs de processabilité, à savoir des agents anti-bloquant et des agents glissant) nécessaire pour palier aux problèmes de mise en œuvre. En effet, l'ajout de résines tackifiantes rend la formulation de résine de scellage pelable très collante, ce qui entraîne des problèmes de collage sur le rouleau de refroidissement (« chill roll ») en extrusion-couchage ou d'ouverture de gaine en soufflage de gaine. Comme énoncé précédemment, il est connu de l'homme du métier que, dans le but de palier à ces problèmes, une forte additivation (additifs de processabilité) est nécessaire, mais cette additivation nuit à la transparence de la composition.

Ainsi, il est recherché à l'heure actuelle une composition thermoplastique adhésive de scellage ne présentant les inconvénients susvisés mais conservant les bonnes propriétés obtenues avec les compositions adhésives de l'art antérieur.

### Brève description de l'invention

De façon surprenante, la demanderesse a découvert que l'association d'un type particulier de copolymère avec au moins une résine tackifiante ainsi que des additifs de processabilité dans un rapport particulier, notamment pour les agents anti-bloquant et les agents glissant, permet d'obtenir une composition adhésive de scellage (pelable) présentant toutes les propriétés des compositions adhésives selon l'art antérieur tout en surmontant les inconvénients, essentiellement en terme de processabilité et de transparence de la composition, de ces compositions.

Cette découverte va à l'encontre de ce qui pouvait être pressenti par l'homme du métier car l'homme du métier n'envisagerait pas de diminuer le taux de résine tackifiante car il sait que cette diminution serait indubitablement préjudiciable aux propriétés de scellage de la composition. Or, la composition adhésive selon l'invention, contenant moins de 5% (ou éventuellement jusqu'à 5% inclus) de résine tackifiante, permet de conserver de bonnes propriétés de scellage tout en maintenant la bonne stabilité thermique et les propriétés optiques désirées.

La présente invention concerne ainsi une composition adhésive, utilisable dans un procédé d'extrusion-couchage pour application sur un support ou dans un procédé d'extrusion- lamination pour coller entre eux plusieurs supports de nature différente ou non, dans une large gamme de température, comprenant :
- de 91% à 98% en poids de ladite composition, d'un copolymère d'éthylène et d'acrylate d'alkyle ;
- au moins une résine tackifiante ;
- des additifs de processabilité comprenant au moins un agent anti-bloquant et un agent glissant,
caractérisée en ce que la résine tackifiante représente entre 1,5% et 5% du poids de la composition et lesdits additifs représentent entre 0,5% et 3,5% du poids de la composition et en ce que l'agent anti-bloquant représente, dans les additifs de processabilité, au moins 60% en poids desdits additifs.

D'autres caractéristiques ou modes de réalisation de l'invention sont présentées ci-après :
- avantageusement, la résine tackifiante représente entre 3% et 4% du poids de la composition ;
- de préférence, le taux d'acrylate dans le copolymère d'éthylène et d'acrylate d'alkyle est compris entre 15% et 30% du poids dudit copolymère ;
- de préférence, le copolymère d'éthylène et d'acrylate d'alkyle consiste en un copolymère d'éthylène et d'acrylate de méthyle ;
- selon une spécificité de l'invention, le MFI du susdit copolymère est compris entre 5 g/10 min. et 15 g/10 min. (à 190°C, 2,16 kg) ;
- avantageusement, les additifs de processabilité sont présents entre 1,5% et 2,5% en poids de ladite composition ;
- de préférence, les additifs de processabilité consistent uniquement en au moins un agent anti-bloquant et au moins un agent glissant, l'agent anti-bloquant représentant au moins 70% en poids desdits additifs ;
- selon un mode d'exécution, la composition selon l'invention consiste uniquement en le susdit copolymère, la susdite résine tackifiante et lesdits additifs de processabilité.

L'invention concerne aussi un film de scellage constitué d'une composition telle que présentée ci-dessus, caractérisé en ce que son épaisseur est comprise entre 10 et 20 micromètres (µm).

La présente invention se rapporte également à une structure multicouche comprenant au moins deux films dont l'un est le film de scellage mentionné précédemment, caractérisée en ce que le second film est choisi parmi l'aluminium, le papier ou carton, la cellophane, les films à base de résines polyéthylène, polypropylène, polyamide, polyester, chlorure de polyvinyle(PVC), chlorure de polyvinylidène (PVDC), polyacrylonitryle (PAN), ces films étant orientés ou non, métallisés ou non, traités ou non par voie physique ou chimique, et les films revêtus d'une fine couche barrière inorganique, tels que le polyester (PET SiOx ou AlOx).

### Description des Figures annexées

La description qui va suivre est donnée uniquement à titre illustratif et non limitatif en référence aux figures annexées, dans lesquelles :
- les Figures la à le illustrent l'un des tests et les mesures de ce test consistant du collage des éprouvettes sur un rouleau de refroidissement.

### Description détaillée de l'invention

S'agissant du copolymère d'éthylène et d'acrylate, il pourra s'agir d'un (meth)acrylate d'alkyle, le groupement alkyle pouvant avoir jusqu'à 24 atomes de carbone. A titre d'exemples non limitatif pour ce copolymère d'éthylène et d'acrylate, on pourra citer les acrylates en C1-C8 (de 1 à 8 atomes de carbones), ou des acrylate d'alkyle comme (meth)acrylate d'alkyle C1-C8, n-butyl ou isobutyl acrylate et méthyle éthyle methacrylate.

Il a été noté par la demanderesse que des résultats encore meilleurs sont obtenus, dans le cadre des objectifs de la présente demande, avec des copolymères dans lesquels le taux d'acrylate d'alkyle représente entre 15% et 30% du poids du copolymère.

Il faut noter également que les compositions ci-après présentent toutes des MFI (« Melt Flow Index ») à 12 g/10 min. (à 190°C, 2,16 kg) mais la demanderesse a démontré par ailleurs que le MFI du copolymère choisi devait se situer entre 5 g/10 min. et 15 g/10 min. (à 190°C, 2,16 kg) pour que les objectifs de l'invention puissent être atteints.

S'agissant de la résine tackifiante, il s'agit de polymères présentant un poids moléculaire moyen en nombre inférieur ou égal à 10 000 g.mol⁻¹ (gramme par mole) choisis parmi les trois types de résines (polymères) suivantes :
- résine rosine type acide, ester, hydrogénée et dimérizée ;
- résine hydrocarbone type aliphatique, aliphatique hydrogénée, aromatique, aromatique hydrogénée, aliphatique/aromatique, aliphatique/aromatique hydrogénée, cycloaliphatique, cycloaliphatique hydrogénée, cycloaliphatique/aromatique et cycloaliphatique/aromatique hydrogénée ;
- résine terpène type polyterpène et phénolterpène.

S'agissant des additifs de processabilité, dans le cadre de la présente invention, ils sont spécifiquement et uniquement de deux natures, à savoir des agents anti-bloquant et agents glissant.

On entend par agent anti-bloquant le fait qu'un tel additif permet de diminuer l'adhésion entre deux surfaces de polymère. Les agents anti-bloquant selon la présente peuvent consister en des composants de type organique tels que le behenamide, stearamide, ethylène bis-oléamide, ethylène bis-stearamide ou des composants de type inorganique tels que la silice, talc, carbonate de calcium, kaolin, argile.

On entend par agent glissant le fait qu'un tel additif permet de diminuer le coefficient de friction du produit auquel il s'ajoute. Les agents glissants selon la présente peuvent consister en l'erucamide, l'oleamide, l'oleyl palmitamide et le stearyl erucamide.

On notera que, dans la suite, l'invention est illustrée avec un seul type de résine tackifiante, à savoir la Régalite R1125, mais la demanderesse a montré que l'invention fonctionnerait également avec l'une des résines tackifiantes mentionnées ci-dessus.

La préparation de la composition adhésive selon la présente s'exécute selon les méthodes bien connues de l'homme du métier. A titre d'exemple non limitatif, une telle composition adhésive peut être obtenue classiquement par extrusion bi-vis corotative.

Une structure multicouche comportant un film d'une composition selon la présente invention est obtenue sans difficulté par l'homme du métier selon l'une des méthodes bien connues, telles que par exemple l'extrusion-lamination. Bien que cette voie de synthèse, à savoir l'extrusion-lamination, est particulièrement adaptée à la constitution d'un film de composition selon l'invention ou d'un multicouche incorporant un tel film, la présente invention n'est pas limitée à ce mode de synthèse et pourra par exemple être envisagée dans un procédé de préparation par thermolamination d'un film obtenu par soufflage de gaine.

### Obtention des formulations des compositions testées :

Les éprouvettes de compositions testées, selon l'invention et selon l'art antérieur, sont réalisées exactement selon un même procédé. On réalise en effet un opercule, c'est-à-dire un multicouche incluant la composition à tester. Ces opercules sont réalisés par coextrusion couchage sur aluminium sur une ligne laboratoire Collin®.

Pour le test principal de pelage, les structures de toutes les éprouvettes sont exactement les mêmes, à l'exception bien entendu de la composition adhésive à tester. Ainsi, la structure de ces opercules consiste en Aluminium 37 µm / liant 6 µm / composition adhésive 15 µm.

Les propriétés physico-chimiques à tester pour une composition adhésive de scellage sont nombreuses. En l'espèce, les tests réalisés et présentés ci-après incluent le test de pelage, la mesure du bloquant, la mesure des coefficients de friction statique et dynamique, le Haze, le collage sur un rouleau de refroidissement (« chill roll ») et des tests de stabilité thermique.

### Tests réalisés :

### Test de pelage

Les forces de pelage sont mesurées après scellage de l'opercule (différentes éprouvettes susvisées) sur différents support. On réalise une soudure d'un opercule sur une feuille de polymère représentant le contenant (notamment Polystyrène, Polyéther téréphtalate etc...) à l'aide d'une operculeuse AINPACK® (soudeuse thermique). La largeur des mords est de 3 millimètres (mm).

Les conditions de scellage sont :
Pression appliquée : 2,26 N/mm²
Temps de scellage : 1 seconde
Température variable : 130°C, 160°C, 180°C, 200°C & 220°C

Après un conditionnement des « échantillons operculés » dans une atmosphère à 50% HR (Humidité Relative) et 23°C pendant au moins 24 heures, on effectue un pelage des éprouvettes à vitesse constante (100 mm/minute) par l'intermédiaire d'un dynamomètre Synergie 200H équipé d'une cellule de force de 100 N et d'un plateau à 90°.

### Mesure du bloquant des éprouvettes

Le bloquant est mesuré sur un film monocouche d'une composition adhésive, selon la présente invention ou selon l'art antérieur, de 50 µm (micromètre) d'épaisseur par extrusion couchage selon la norme ISO 115-02 intitulée « Plastics -- Film and sheeting -- Détermination of blocking résistance ».

### Mesure du coefficient de friction statique et dynamique des éprouvettes

Les coefficients de friction statique et dynamique sont mesurés sur un film monocouche d'une composition adhésive, selon l'invention et selon l'art antérieur, de 50 µm d'épaisseur réalisé par extrusion couchage selon la norme ASTM D 1894 intitulée « Standard test method for static and kinetic coefficients of friction of plastic film and sheeting ».

### Test de Haze

Le Haze est mesuré sur un film monocouche d'une composition adhésive, selon l'invention et l'art antérieur, de 50 µm d'épaisseur réalisé par extrusion couchage selon la norme ASTM D-1003-007 intitulée « Standard test method for haze and luminous transmittance of transparent plastics ».

### Mesure du collage des éprouvettes sur un rouleau de refroidissement (« chill roll »)

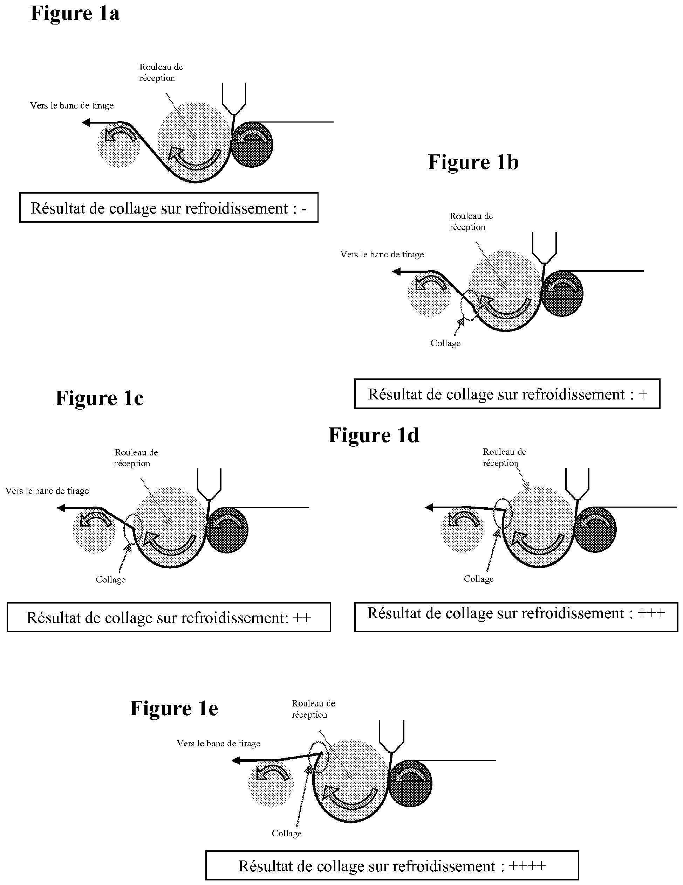

Le collage sur un rouleau de refroidissement est évalué lors de la réalisation en extrusion-couchage d'un opercule d'éprouvette. Plus l'opercule se sépare en haut du rouleau de refroidissement, plus le collage est important. Plus précisément, on exerce une force destinée à tirer le film présent sur le rouleau de refroidissement et on mesure la facilité d'étirage du film. Afin de bien appréhender ce test et la mesure qui en découle, la figure 1 en annexe permet de bien comprendre le principe du test et de sa mesure, même s'il est bien entendu que l'homme connaît bien cette procédure.

### Test de stabilité thermique

Les analyses sont réalisées par Analyse Thermo-Gravimétrique (ATG) selon les procédures suivantes :

### Mesure en dynamique :

Les mesures sont réalisées sur l'appareil TG 209F1 Netzsch

Chauffe de 25 à 600°C à 10°C/min sous air et azote

### Mesure en isotherme :

Les mesures sont réalisées sur l'appareil TG 209F1 Netzsch

Chauffe de 25 à 230, 250, 280 et 300°C à 50°C/min puis isotherme sous azote

### Matières premières des compositions testées :

Lotryl® 20MA08 : copolymère éthylène - acrylate de méthyle dont le taux d'acrylate est de 20% en poids du copolymère et le MFI de 8 g/10 min. (190°C, 2,16 kg). Dans les tableaux de résultats présentés ci-après, ce Lotryl® est notée par les initiales 20MA08.

Lotryl® 40MA10 : copolymère éthylène - acrylate de méthyle dont le taux d'acrylate est de 40% en poids du copolymère et le MFI de 8 g/10 min. (190°C, 2,16 kg). Dans les tableaux de résultats présentés ci-après, ce Lotryl® est notée par les initiales 40MA08.

Lotryl® 10MA08 : copolymère éthylène - acrylate de méthyle dont le taux d'acrylate est de 10% en poids du copolymère et le MFI de 8 g/10 min. (190°C, 2,16 kg). Dans les tableaux de résultats présentés ci-après, ce Lotryl® est notée par les initiales 10MA08.

Résine Tackifiante (commerciale) : Résine tackifiante de bas poids moléculaire totalement hydrogénée dont le point de ramollissement est 123°C. Dans les tableaux de résultats présentés ci-après, la résine tackifiante est notée par les initiales RT.

Talc 10MOOS vendu par la société Imerys : cet agent de processabilité remplit à la fois la fonction d'agent anti-bloquant et d'agent glissant. Ce composant est dans la suite noté talc.

EBS : Ethylène-bis-stéaramide fourni par la société Croda. Cet agent de processabilité est un agent anti-bloquant. Ce composant est dans la suite noté EBS.

Er : Erucamide fourni par la société Croda. Cet agent de processabilité est un agent glissant. Ce composant est dans la suite noté Er.

Les additifs de processabilité sont mélangés pour constituer trois additivations, la première additivation représentant 1% du poids de la composition adhésive, la deuxième additivation représentant 2% du poids de la composition adhésive et la troisième représentant 4,5% du poids de la composition adhésive.
Additivation a : 0,25% Er + 0,25% EBS + 0,5% talc
Additivation b : 0,5% Er + 0,5% EBS + 1% talc
Additivation c : 1% Er + 1% EBS + 2,5% talc

### Résultats des tests :

La composition adhésive de scellage doit présenter certaines caractéristiques avantageuses.

Ici sont reportés de façon non exhaustive les résultats relatifs à une composition adhésive selon la présente invention. Dans ce cadre, quatre caractéristiques ont été plus particulièrement visées, à savoir :
- le Haze doit être inférieur à 15, idéalement inférieure ou égal à 12 ; et
- le collage sur le rouleau de refroidissement (« chill roll »), noté CR ci-dessous, lors de la réalisation par extrusion-couchage doit être faible (noté « - ») ;
- la température limite d'ouverture de gaine est d'au moins 100°C ;
- le coefficient pour le glissant dynamique et le coefficient pour le glissant statique doivent être d'au moins 0,4 ;
- le bloquant doit être à au plus 150 grammes

| Formulation | Haze | Collage sur le CR | T°C limite d'ouverture de gaine | Ks | Kd | bloquant |
|---|---|---|---|---|---|---|
| 20MA08 | 5 | + | 85 | NM | NM | 640 |
| 20MA08 + additivation a | 8 | - | 95 | 0,43 | 0,41 | 44 |
| 20MA08 + additivation b | 12 | - | 105 | 0,25 | 0,24 | 24 |
| 20MA08 + additivation c | 40 | - | 105 | 0,21 | 0,18 | 23 |
| 20MA08 + 3,5 RT | 6 | ++ | 78 | NM | NM | NM |
| 20MA08 + 3,5% RT + additivation b | 11 | - | 105 | 0,4 | 0,42 | 70 |
| 40MA08 + 3,5% RT + additivation b | 12 | - | 104 | 0,62 | 0,59 | 76 |
| 10MA08 + 3,5% RT + additivation b | 11 | - | 107 | 0,35 | 0,39 | 65 |
| 20MA08 + 5% RT + additivation b | 10 | + | 102 | 0,41 | 0,44 | 170 |
| 20MA08 + 2% RT + additivation b | 12 | - | 108 | 0,32 | 0,31 | 40 |
| 20MA08 + 6% RT + additivation b | 10 | + | 95 | NM | NM | 564 |
| 20MA08 + 10% RT | 7 | +++ | 72 | NM | NM | NM |
| 20MA08 + 10% RT + additivation c | 40 | - | 100 | 0,39 | 0,40 | 210 |

| | | | | | | |
|---|---|---|---|---|---|---|
| NM : non mesurable | | | | | | |

Les forces de propagation obtenues lors du scellage de l'opercule sur un contenant en PET (polyéther téréphtalate). On constate lors de ce test que les valeurs de propagation sont quasiment identiques que l'on soit à un taux de 10% de résine ou à des taux compris dans le domaine de l'invention.

Des tests ont également été conduits sur d'autres types de supports, notamment sur du polystyrène et du polypropylène, et ont montré des résultats similaires à ceux reportés dans le tableau ci-dessous.

Les formulations n°1 à n°8 dans les deux tableaux ci-dessous sont composées respectivement comme suit :
n°1 : 20MA08 + 3,5% RT + additivation b
n°2 : 20MA08 + 5% RT + additivation b
n°3 : 20MA08 + 2% RT + additivation b
n°4 : 20MA08 + 6% RT + additivation b
n°5 : 40MA08 + 3,5% RT + additivation b
n°6 : 10MA08 + 3,5% RT + additivation b
n°7 : 20MA08 + 10% RT + additivation c
n°8 : 20MA08 + additivation a

| T° scellage (°C) | n°1 | n°2 | n°3 | n°4 | n°5 | n°6 | n°7 | n°8 |
|---|---|---|---|---|---|---|---|---|
| 130 | 2,5 | 2,7 | 2,6 | 2,4 | 2,7 | 2 | 2,4 | 1,7 |
| 145 | 2,8 | 2,9 | 2,8 | 2,7 | 2,9 | 2,3 | 2,7 | 2 |
| 160 | 3,3 | 3,2 | 3,2 | 3,4 | 3,4 | 2,7 | 3,3 | 2,3 |
| 180 | 3,4 | 3,3 | 3,4 | 3,3 | 3,4 | 3 | 3,4 | 2,4 |
| 220 | 3,5 | 3,4 | 3,5 | 3,3 | 3,4 | 3 | 3,5 | 2,5 |

La stabilité thermique est mesurée avec les différents indicateurs mentionnés dans le tableau ci-dessous. On constate le très net gain en stabilité des compositions selon l'invention par rapport en particulier à une composition présentant un taux de résine tackifiante à 10% en poids de la composition.

| Formulation | Onset de dégradation sous air | Onset de dégradation sous N₂ | Perte au cours d'une isotherme de 1 heure sous azote | | | |
|---|---|---|---|---|---|---|
| | | | 230°C | 250°C | 280°C | 300°C |
| n°1 | 330 | 398 | 0,60% | 0,82% | 1,31% | 1,53% |
| n°2 | 317 | 370 | 0,75 | 1,31 | 2,72 | 3,14 |
| n°3 | 335 | 402 | 0,42 | 0,62 | 0,93 | 1,02 |
| n°4 | 314 | 363 | 0,86 | 1,43 | 3,2 | 4,26 |
| n°5 | 316 | 370 | 0,76 | 1,47 | 2,78 | 3,08 |
| n°6 | 331 | 400 | 0,59% | 0,81% | 1,30% | 1,50% |
| n°7 | 310 | 350 | 1,3% | 2,2% | 4,5% | 6,2% |
| n°8 | 337 | 409 | 0,22% | 0,26% | 0,35% | 0,52% |

## Revendications

1. Composition adhésive, utilisable dans un procédé d'extrusion-couchage pour application sur un support ou dans un procédé d'extrusion- lamination pour coller entre eux plusieurs supports de nature différente ou non, dans une large gamme de température, comprenant :
- de 91% à 98% en poids de ladite composition, d'un copolymère d'éthylène et d'acrylate d'alkyle ;
- au moins une résine tackifiante ;
- des additifs de processabilité comprenant au moins un agent anti-bloquant et un agent glissant,
**caractérisée en ce que** la résine tackifiante représente entre 1,5% et 5% du poids de la composition et lesdits additifs représentent entre 0,5% et 3,5% du poids de la composition et **en ce que** l'agent anti-bloquant représente, dans les additifs de processabilité, au moins 60% en poids desdits additifs.

2. Composition selon la revendication 1, **caractérisée en ce que** la résine tackifiante représente entre 3% et 4% du poids de la composition.

3. Composition selon la revendication 1 ou 2, **caractérisée en ce que** le taux d'acrylate dans le copolymère d'éthylène et d'acrylate d'alkyle est compris entre 15% et 30% du poids dudit copolymère.

4. Composition selon l'une quelconque des revendications précédentes, **caractérisée en ce que** le copolymère d'éthylène et d'acrylate d'alkyle consiste en un copolymère d'éthylène et d'acrylate de méthyle.

5. Composition selon l'une quelconque des revendications précédentes, **caractérisée en ce que** le MFI du susdit copolymère est compris entre 5 g/10 min. et 15 g/10 min. (à 190°C, 2,16 kg).

6. Composition selon l'une quelconque des revendications précédentes, **caractérisée en ce que** les additifs de processabilité sont présents entre 1,5% et 2,5% en poids de ladite composition.

7. Composition selon l'une quelconque des revendications précédentes, **caractérisée en ce que** les additifs de processabilité consistent uniquement en au moins un agent anti-bloquant et au moins un agent glissant, l'agent anti-bloquant représentant au moins 70% en poids desdits additifs.

8. Composition selon l'une quelconque des revendications précédentes, **caractérisée en ce qu'**elle consiste uniquement en le susdit copolymère, la susdite résine tackifiante et lesdits additifs de processabilité.

9. Film de scellage constitué d'une composition selon l'une quelconque des revendications précédentes, **caractérisé en ce que** son épaisseur est comprise entre 10 et 20 micromètres (µm).

10. Structure multicouche comprenant au moins deux films dont l'un est selon la revendication 9, **caractérisée en ce que** le second film est choisi parmi l'aluminium, le papier ou carton, la cellophane, les films à base de résines polyéthylène, polypropylène, polyamide, polyester, chlorure de polyvinyle(PVC), chlorure de polyvinylidène (PVDC), polyacrylonitryle (PAN), ces films étant orientés ou non, métallisés ou non, traités ou non par voie physique ou chimique, et les films revêtus d'une fine couche barrière inorganique, tels que le polyester (PET SiOx ou AlOx).

## Patentansprüche

1. Klebstoffkomposition, die in einem Verfahren zur Extrusionbeschichtung zur Aufbringung auf eine Auflage oder in einem Verfahren zur Extrusionslaminierung zum Kleben von mehreren Auflagen verschiedener Art oder nicht untereinander in einem großen Temperaturbereich verwendet werden kann, umfassend:
- 91 bis 98 Gewichtsprozent der Komposition eines Ethylen- und Alkylacrylatpolymers;
- mindestens ein klebrigmachendes Harz;
- Verarbeitbarkeitszusätze, umfassend mindestens eine Antiblockiermittel und ein Gleitmittel,
**dadurch gekennzeichnet, dass** das klebrigmachende Harz zwischen 1,5 % und 5 % des Gewichts der Komposition darstellt und die Zusätze zwischen 0,5 % und 3,5 % des Gewichts der Komposition darstellen, und dadurch, dass das Antiblockiermittel in den Verarbeitbarkeitszusätzen mindestens 60 Gewichtsprozent der Zusätze darstellt.

2. Komposition nach Anspruch 1, **dadurch gekennzeichnet, dass** das klebrigmachende Harz zwischen 3 % und 4 % des Gewichts der Komposition darstellt.

3. Komposition nach Anspruch 1 oder 2, **dadurch gekennzeichnet, dass** der Acrylatgehalt im Ethylen- und Alkylacrylatcopolymer im Bereich zwischen 15 % und 30 % des Gewichts des Copolymers liegt.

4. Komposition nach einem der vorhergehenden Ansprüche, **dadurch gekennzeichnet, dass** das Ethylen- und Alkylacrylatcopolymer aus einem Ethylen- und Methylacrylatcopolymer besteht.

5. Zusammensetzung nach einem der vorhergehenden Ansprüche, **dadurch gekennzeichnet, dass** der MFI des oben angegebenen Copolymers im Bereich zwischen 5 g/10 und 15 g/10 min. (bei 190 °C, 2,16 kg) liegt.

6. Zusammensetzung nach einem der vorhergehenden Ansprüche, **dadurch gekennzeichnet, dass** die Verarbeitbarkeitszusätze zwischen 1,5 und 2,5 Gewichtsprozent der Komposition vorhanden sind.

7. Komposition nach einem der vorhergehenden Ansprüche, **dadurch gekennzeichnet, dass** die Verarbeitbarkeitszusätze einzig aus mindestens einem Antiblockiermittel und mindestens einem Gleitmittel bestehen, wobei das Antiblockiermittel mindestens 70 Gewichtsprozent der Zusätze darstellt.

8. Komposition nach einem der vorhergehenden Ansprüche, **dadurch gekennzeichnet, dass** sie einzig aus dem oben angegebenen Copolymer, dem oben angegebenen klebrigmachenden Harz und den Verarbeitbarkeitszusätzen besteht.

9. Siegelfilm, der aus einer Komposition nach einem der vorhergehenden Ansprüche besteht, **dadurch gekennzeichnet, dass** seine Dicke im Bereich zwischen 10 und 20 Mikrometer (µm) liegt.

10. Mehrschichtige Struktur, umfassend mindestens zwei Filme, von denen einer gemäß Anspruch 9 ist, **dadurch gekennzeichnet, dass** der zweite Film ausgewählt ist aus Aluminium, Papier oder Karton, Zellophan, Filmen, basierend auf Polyethylen-, Polypropylen-, Polyamid-, Polyester-, Polyvinylchlorid (PVC)-, Polyvinilydenchlorid (PVDC)-, Polyacrylonitryl (PAN)-Harzen, wobei diese Filme ausgerichtet sind oder nicht, metallisiert oder nicht, auf physischem oder chemischen Weg behandelt oder nicht, und die Filme beschichtet sind aus einer feinen anorganischen Barriereschicht wie z. B. Polyester (PET SiOx oder AlOx).

## Claims

1. Adhesive composition usable in an extrusion-coating process for application onto a substate or in an extrusion-laminating process to bond together several substrates whether or not of different type, over a broad temperature range, comprising:
- from 91 to 98 % of an ethylene and alkyl acrylate copolymer, by weight of said composition;
- at least one tackifying resin;
- processability additives comprising at least one anti-block agent and a slip agent,
**characterized in that** the tackifying resin represents between 1.5 and 5 % by weight of the composition, and said additives represent between 0.5 and 3.5 % by weight of the composition, and **in that** the anti-block agent in the processability additives represents at least 60 weight % of said additives.

2. The composition according to claim 1, **characterized in that** the tackifying resin represents between 3 and 4 % by weight of the composition.

3. The composition according to claim 1 or 2, **characterized in that** the percentage of acrylate in the ethylene and alkyl acrylate copolymer is between 15 and 30 % by weight of said copolymer.

4. The composition according to any of the preceding claims, **characterized in that** the ethylene and alkyl acrylate copolymer consists in a copolymer of ethylene and methyl acrylate.

5. The composition according to any of the preceding claims, **characterized in that** the MFI of said above-mentioned copolymer is between 5 g/10 min and 15 g/10 min (at 190 °C, 2.16 kg).

6. The composition according to any of the preceding claims, **characterized in that** the content of the processability additives is between 1.5 and 2.5 % by weight of said composition.

7. The composition according to any of the preceding claims, **characterized in that** the processability additives consist solely of at least one anti-block agent and at least one slip agent, the anti-block agent representing at least 70 % by weight of said additives.

8. The composition according to any of the preceding claims, **characterized in that** it consists solely of said above copolymer, said above tackifying resin and said processability additives.

9. Sealing film consisting in a composition according to any of the preceding claims, **characterized in that** the thickness thereof is between 10 and 20 micrometers (µm).

10. Multilayer structure comprising at least two films of which one according to claim 9, **characterized in that** the second film is selected from among aluminium, paper or cardboard, cellophane, resin-based films of polyethylene, polypropylene, polyamide, polyester, polyvinyl chloride (PVC), polyvinylidene chloride (PVDC), polyacrylonitrile (PAN), these films being films oriented or non-oriented, metallized or non-metallized, treated or non-treated via physical or chemical process, and films coated with a thin inorganic barrier layer such as polyester (PET SiOx or AlOx).
